# EUROPEAN PATENT SPECIFICATION

(11) **EP 1 236 795 B1**
(45) Date of publication and mention of the grant of the patent: **28.09.2005**
(21) Application number: 02075813.2
(22) Date of filing: 28.02.2002
(51) Int. Cl.: C12G 1/02

(54) **Improved vinification process**
Verbessertes Weinbereitungsverfahren
Procédé de vinification amélioré

(30) Priority: 01.03.2001 IT VI010050
(43) Date of publication of application: 04.09.2002
(73) Proprietor: Enologica Vason S.r.l., Verona (IT)
(72) Inventor: Ferrarini, Roberto, 37020 Pedemonte (Verona) (IT)
(74) Representative: Long, Giorgio

(56) References cited:
- EP-A- 0 325 193
- CH-A- 659 255
- DE-A- 3 045 588
- DE-A- 4 003 404
- DE-C- 525 382
- FR-A- 2 736 925
- US-A- 3 867 550
- DATABASE WPI Section Ch, Week 197535 Derwent Publications Ltd., London, GB; Class D16, AN 1975-58308W XP002200434 & SU 456 829 A (BRUSILOVSKII S A), 26 February 1975 (1975-02-26)

## Description

### Field of Application

The present invention relates to an improved vinification process.

The process forming the subject of the present text is intended advantageously to be used in the oenological field for refining wines, or to improve the organoleptic and compositional characteristics of wines once the fermentation phase has ended.

### State of the Art

Currently, as is known, the grape vinification process comprises an initial grape crushing and pressing phase followed by an alcoholic fermentation phase. In this phase the sugar is converted into alcohol.

As is known, alcoholic fermentation of musts can take place either via the natural microflora originally present in the grape on through the introduction of specifically selected yeasts.

In dependence on the specific techniques used the fermentation process can take place as a result of one or more strains of the yeast. The different strains in fact have different physiological properties and involve chemical fermentation processes which can depend not only on the specific species of yeast used but also on the specific strain within that species or the interactions which can occur between the different strains. The characteristics of wild yeasts naturally present depend on the ambient conditions and the technologies of the harvest and the operations in and situation of the cellar.

To improve and standardise the vinification processes it is known practice to add yeasts obtained from a selected culture.

Generally, such yeasts are constituted by strains adapted to the specific vinifications; they are added in quantities such as to make them predominant with respect to the natural yeasts present. It can be necessary, moreover, to inactivate the natural microbial population and to introduce into the substrate one or more pure cultures in full activity.

During the fermentation, control of the activity of the culture introduced is a determinant for the achievement of the desired result. This control is exercised for example through a rational use of sulphur dioxide, through must clarification techniques and suitable additions of selected yeast.

It is known from Patent CH 659 255 A5 the use of a betaglucanasic enzyme originating from Trichoderma harzianum as additive for wine making in order to improve the filtration properties of wine and must. In Patent DE 40 030404 A1 a process for production of a fermentation product with reduced ethanol content is described. The consumption of ethanol content is achieved by creating the conditions for an aerobic fermentation through addition of oxygen (air) to the fermenting product.

The addition of controlled and specific microbial populations, generally in competition or substitution for the indigenous microflora, makes it possible to obtain numerous advantages, among which are a greater rapidity of the fermentation process, an increase in the ratio between ethyl alcohol developed and the sugar consumed, a reduction of the volatile acids, a rapid clarification and a greater capacity for conservation (keeping quality).

Alongside these primary activities relating to the fermentation process itself the use of yeasts, especially if maintained present in the wine, also allows some further important "secondary" activities which relate above all to the organoleptic characteristics of the wine and which therefore affect the detectable sensory perceptions upon tasting.

It is known, in fact, for example, that the presence of yeast can introduce, through phenomena of cellular dissolution, introduce colloids able to fix aromatic substances contributing to the structure of the wine and reducing anomalous odours such as those due to hydrogen sulphide. Moreover, some substances derived from the disolution of yeasts stabilise the wine against precipitations of potassium bitartrate and proteins. Further positive effects deriving from the presence of the yeasts can be attributed to the fact that the yeast in lysis liberates enzymes which contribute to the improved evolution of the wines, to the fact that even dead yeast consumes dissociated oxygen and therefore wines conserved in the presence of yeast are less subject to oxidation phenomena, and to the fact that the cellular walls of the yeast can absorb various unwanted substances, among which are fermentation products, heavy metals, residues of anti-parasitic treatments, or brownish-yellow pigments in white wines.

It is known from European Patent Application EP 325 193 A 1 a process for making sparkling wine in which a secondary yeast dose having reduced autolysis stability is added to the fermenting wine during the second fermentation. This secondary yeast dose autolyses during the second fermentation and enriches the wine with the yeast constituents. In patent application FR 2736925 A1 a vinification process according to the "méthode champenoise" is described, in which the yeasts for the second fermentation in the bottle are added to the wine by providing a wine bottle bung which encloses a binder material entrapping the yeast dose. The binder dissolves upon contact with the wine and releases the yeast cells.

The said "secondary" actions are performed by the yeasts both in the fermentation phase and in the post-fermentation phase in which the dead yeast or yeast in lysis (lees) is maintained within the wine: it is possible therefore to affirm that the yeasts can be subject, in the fermentation phase and in a post-fermentation phase to a lysogenic action which causes a substantial improvement in the quality of the wines. For this purpose, in many vinifications it is arranged to maintain in the wine, after fermentation, the finest fraction of sediment constituted predominantly by the yeast which has produced the fermentation; in this phase repeated interventions of remixing of the fine product to put the yeast back in suspension are necessary.

It is known from Patent US 3 867 550 a process for bulk secondary fermenting of wine to produce sparkling wine which envisages the mixing of added yeast through wine in an elongated bulk tank by rotating means.

It is not, however, always possible to intervene with such technology; in fact, frequently, reduction phenomena occur which make it necessary for immediate separation of the yeast from the wine thus losing the opportunity for the above-described positive "secondary" actions.

Currently, uses of selected yeasts other than the main use in the first phase of fermentation of the must have not been seriously considered in that, up until now, their effect has been tested and evaluated solely with these objects in view. Therefore the possibility of the use of yeasts in the vinification processes is currently rather circumscribed and defined within the ambit of the fermentation.

This fact evidently constitutes a limitation on the possibilities of exploiting the potential of the yeasts.

As is known, in nature there are very many species of yeasts available and there are considerably fewer for oenological use. Among the most common yeasts can be listed, by way of example: *Saccharomyces cerevisiae*, *Saccharomyces uvarum*, *Saccharomyces chevalieri*, *Saccharomyces bayanus*, *Kloeckera apiculata*, *Pichia*, *etc..*

Very often in the oenological field use is made of active dry yeasts, by which is meant, as is known, yeasts selected for oenological use and made available commercially in dry form or else with a limited amount of water. Generally they are preserved dry for times not exceeding two years. In order to make use of them a preliminary rehydration phase is necessary.

The efficacy and quality of their main activity related to the fermentation of the must is comparable to that of yeasts prepared in suspension, and certainly better than that due to spontaneous fermentations.

However, in the drying phase there is an attendant disactivation of the enzymatic activity, and even after rehydration this activity is less than that of yeasts which have not been subjected to the said drying, preservation and rehydration phases.

Finally, it must be borne in mind that these operations are, in themselves, inconvenient, as well as being rather lengthy and laborious, and can moreover involve a not entirely suitable dosing of the quantity of yeasts required to innoculate the must. These disadvantages can detrimentally affect the outcome of the vinification processes.

It is known from Patent SU 456 829 a process for production of champagne in which a yeast starter is added to sugar free champagnised wine for enrichment with compounds contained in the yeast cells. Patent application DE 30 45 588 A1 discloses a vinification process in which, after a second fermentation, the finished wine is separated into two streams which are individually enriched with yeast compounds by passing through yeast biomass.

### Presentation of the invention

The essential object of the present invention is to make available an improved wine refinement process which allows a versatile use of the yeast, making it possible fully to exploit the primary activity in the fermentation process and to accentuate the advantages achievable in the quality of the wine which are attributable solely to the secondary activity of the yeasts due to enzymatic and lysogenous actions of the yeast cells in the post fermentation phase during conservation.

A further object of the present invention is that of making available a yeast which can be used simply and rapidly in the refining process.

These and other objects are all achieved by an improved vinification process which comprises a phase of pressing the grapes to obtain the must; one or more phases of fermentation of the sugars by the action of a main dose of yeasts for transformation of the must into wine; and at least one phase of wine maturation for refining its organoleptic qualities. The process comprises an addition phase, performed subsequently to the fermentation phase, in which at least one secondary dose of yeast for oenological use not intended to perform a fermentation action is added.

The process is characterised by the fact that said secondary dose of yeast is composed of non-dried active paste yeast for oenological use with a residual water content lying between 50% and 95%.

This process makes it possible fully to exploit the potential of the yeasts to obtain superior quality wines.

Moreover, the method of use of the yeasts makes it possible to perform the vinification processes in an extremely easy manner.

### Short description of the Drawings

Further characteristics and advantages of the invention will become more clearly evident in the light of the following detailed description given with the aid of the attached set of drawings, which represent an embodiment thereof purely by way of non-limitative example, in which:
Figure 1 shows the results of a classification test by means of sensory preference analysis on samples of white wine treated with different forms of the same strain of yeast and with other products derived from yeast;
Figures 2 and 3 plot the sensory profiles of a red wine and a white wine subjected to the treatment with active paste yeast (against untreated wine);
Figure 4 plots a diagram of relative absorption of oxygen by differently treated wines; and
Figure 5 plots the variation of the index of filtrability after treatment with paste yeast activated for oenological use.

### Detailed description of a preferred embodiment

In general terms the vinification process comprises a number of phases, first for treatment of the must and subsequently of the wine for obtaining a drink with suitable organoleptic characteristics. It starts substantially with the collection of the grapes during the harvest and concludes with the maturing of the wine in suitable containers (tanks, barrels and bottles) for refinement of its qualities. Immediately after collection the grapes are subjected to a pressing phase for the production of the must which, as is known undergoes the phenomenon of fermentation by means of a main dose of indigenous or inoculated yeasts.

It is in fact known that the yeasts, because of their fermentory metabolism, undergo a first phase of cellular proliferation and then metabolise the sugars, transforming them into ethyl alcohol and carbon dioxide.

Currently, the most advanced vinification techniques still most often provide for control of the fermentation of the wine by replacing the original microflora by the inoculation or addition to the must of a main dose of selected yeasts.

The refinement process according to the invention provides, after the fermentation phase, that is to say after this phase is entirely complete, a phase comprising addition of at least one secondary dose, rather greater than the first, of yeasts for oenological use which are not intended to perform a fermentation and/or reproductive action.

Once introduced into the wine, the said secondary dose of yeast is responsible for various actions which, as will be seen hereinafter, cause a qualitative improvement of the wines.

These positive actions can be regarded as:- producing a colloidal fraction following lysis of the yeast cells with the production of a wine provided with excellent sensory characteristics of roundness, volume and persistence (length) and with reduced anomalous odours;- stabilisation of the wine against precipitations of potassium bitartrate and proteins due to the production of mannoprotein by the yeast cells;- absorption of metals otherwise responsible for instability and catalysis of oxidative reactions;- absorption by the yeast cell walls of coloured pigments, in particular of white wines as well as fermentation catabolytes, residues of anti-parasitic treatments etc;- absorption of oxygen and consequent reduction of oxidation of the wine;- liberation of enzymes which, as shown in the following tables, contribute to the positive evolution of the wines;- elimination of excessive reduction.

Therefore, in accordance with the present invention, yeast can be used not only for purposes connected with the fermentation process or, in any event, for purposes which occur within this process or immediately after its completion, but also for performing exclusively the secondary actions mentioned above. For this purpose the addition of the secondary dose of yeast may take place at any point in the maturation or refinement process of the wine, even after several months from the end of fermentation.

The cited effects are improved by the addition of adjuvants, that is to say substances the use of which is admitted in oenological practice, which are added during the process to increase the effect of the yeast. Moreover, there can be significant synergistic actions between yeast and adjuvants.

In accordance with a further important characteristic of the vinification process forming the subject of the present invention, the envisaged addition of the secondary dose of yeast is preferably achieved by means of yeast in the form of active paste for oenological use (LPA). This involves the use of a yeast which has not ever been subjected to drying or freeze drying, and which has an indicative residue of water of about 60%.

Advantageously the secondary dose of yeast in paste form will lie substantially between 50-150 g/hL for white wines and between 100-300 g/hL for red wines as has been experimentally tested and described hereinafter.

In order to be able to exploit the effect of the production of substances for the structure of the wine, the excessive reduction of the oxygen content must be avoided. Together with the addition of the yeast it is possible to envisage the use of small doses of oxygen.

Given these premises some tests were performed to evaluate the effects on the wine of the addition of oenological paste yeast. Initially the effect of different forms of yeast on the organoleptic characteristics of the wines were compared. White wine treated with active paste yeast (LPA) was compared with white wine treated with the same strain of yeast which had first been dried and then rehydrated upon use. In the same test other products derived from the yeast (extract, lysate and peel) were also compared with the untreated wine. In the case of the treatment with active paste yeast the dose was 100 g/hL whilst for all the dried products the quantity was 40g/hL. All the wines thus treated were conserved for 30 days and then subjected to classification tests by means of sensory preference analysis.

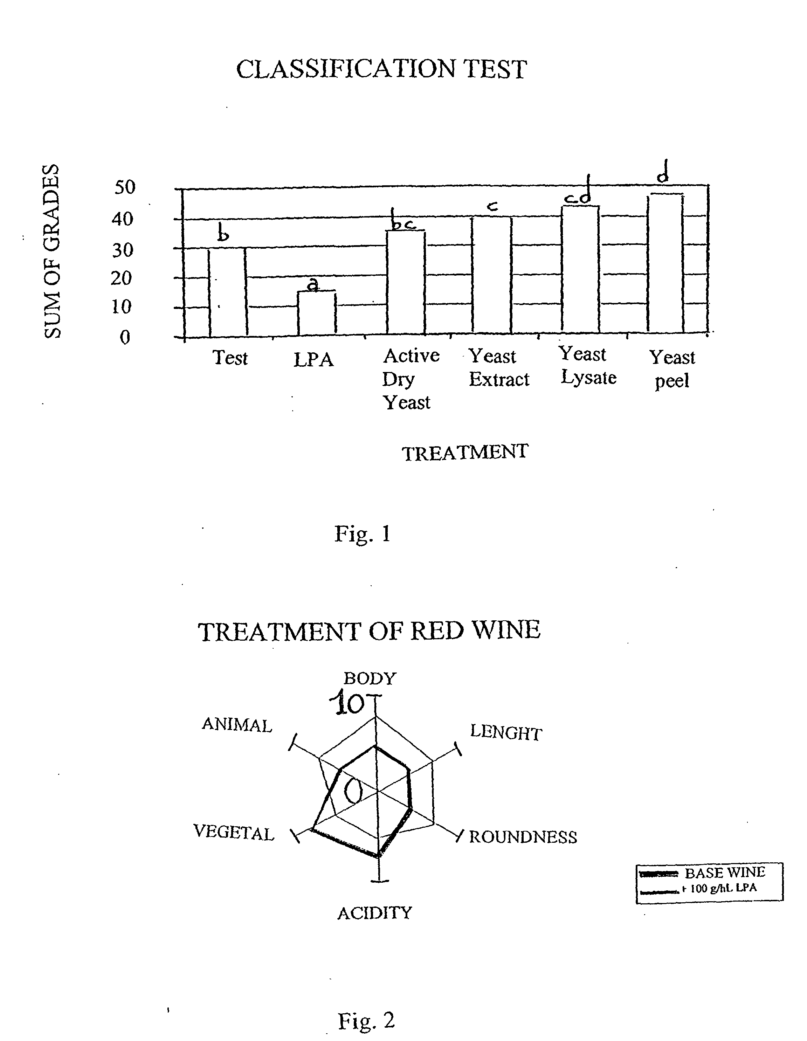

In Figure 1 are shown the results of this test. They show that the treatment with active paste yeast (LPA) improves the characteristics of the product, and by contrast the same yeast in the dry state does not produce the same improvements but rather the value of the sum of the grades indicated shows a downright deterioration in the sensory characteristics.

The other products all produced a deterioration in the sensory characteristics of the wines. In fact, in the various different treatments from that with active paste yeast there is always evidence a note of "yeasty-bread" smell with the loss of fruity and floral sensations. Such phenomenon was particularly accentuated in the case of products derived from yeast (extract, lysate and peel).

Therefore, experience has shown that the use of active past yeast (LPA) is essential in order to obtain the above-hypothesised advantages.

In order to determine the efficacious dose of active paste yeast the procedure involved increasing doses (25, 50, 100, 200 and 400 g/hL) on three white wines and three red wines. This was followed, after one month of contact under agitation of the various wines conserved at 17°C, by a sensory analysis of each treatment compared with the untreated base wine.

In table 1 below are shown the results of the statistical analysis of the comparative tasting undertaken with the duo-trio test method (that is to say with a method of sensory analysis adapted to bring out the differences between products).

**TABLE I**

| | | **Dose of Active Paste Yeast (g/hL)** | | | | |
|---|---|---|---|---|---|---|
| | | **25** | **50** | **100** | **200** | **400** |
| **WHITE WINE** | A | | * | ** | ** | ** |
| | B | * | ** | ** | ** | ** |
| | C | | ** | ** | ** | ** |
| **RED WINE** | A | | * | * | ** | ** |
| | B | | | ** | ** | ** |
| | C | | * | * | ** | ** |

Here ** indicates a significant difference with p<0.01, whilst a * indicates a significant difference with p<0.05.

Experiments have shown that as far as white wines are concerned even dosages of 25g/hL of active paste yeast can be perceived with respect to the base wine.

Moreover with dosages equal to 50g/hL the difference between the base wine was noted in a statistically significant manner for all the white wines.

Therefore, in the treatment of white wines the minimum effective dose is an addition of about 50g/hL of active paste yeast (LPA).

As far as the treatment of red wines is concerned, experience shows that this dose is in the region of 100g/hL as shown by the data set out in Table 1; although higher doses lead to a still greater demonstration of the effects of treatment.

In the same tests it was also evaluated if the treatment would lead to an improvement with respect to the test wine at all doses. For the purpose there was performed a series of binary sensory evaluations and associated preference tests (with p<0.05) the results of which are set out in Table II below.

**TABLE II**

| | | **Dose of Active Yeast Paste (g/hL)** | | | | |
|---|---|---|---|---|---|---|
| | | **25** | **50** | **100** | **200** | **400** |
| **WHITE WINE** | A | | | LPA | | Test |
| | B | | LPA | LPA | Test | Test |
| | C | | | LPA | | Test |
| **RED WINE** | A | | LPA | LPA | LPA | LPA |
| | B | | | LPA | | Test |
| | C | | | LPA | LPA | |

With the term "test" the preference for the test wine is indicated, whilst with the term "LPA" the preference for the wine treated with active paste yeast is indicated. The results show that excessive doses can interfere with the sensory modification such as to make the untreated product preferable. Such phenomena are logically more evident in the case of white wines. In the light of these results it is remembered that the advisable dose for white wines is 50-150g/hL, whilst for red wines it is settled at 100-300 g/hL. Higher doses are evaluated from case to case.

A comparison test was therefore performed between active paste yeast for oenological use and a bread yeast *(Saccharomyces cerevisiae)* also used in the moist state.

The results of the preference tests (with p<0.05) are shown in Table III which illustrates that in all comparisons the result is always that the active paste yeast for oenological use is better (that is to say yeast coming from multiplication on a specific substrate for oenological uses). Moreover, even if not shown in the Table, often the *Saccharomyces cerevisiae* for bread gave detrimental results even with respect to the basic test wine.

**TABLE III**

| Wine Type | **Preferred Treatment** |
|---|---|
| WHITE WINE A | LPA |
| WHITE WINE B | LPA |
| WHITE WINE C | LPA |
| RED WINE A | LPA |
| RED WINE B | LPA |
| RED WINE C | LPA |

The term "LPA" indicates active paste yeast.

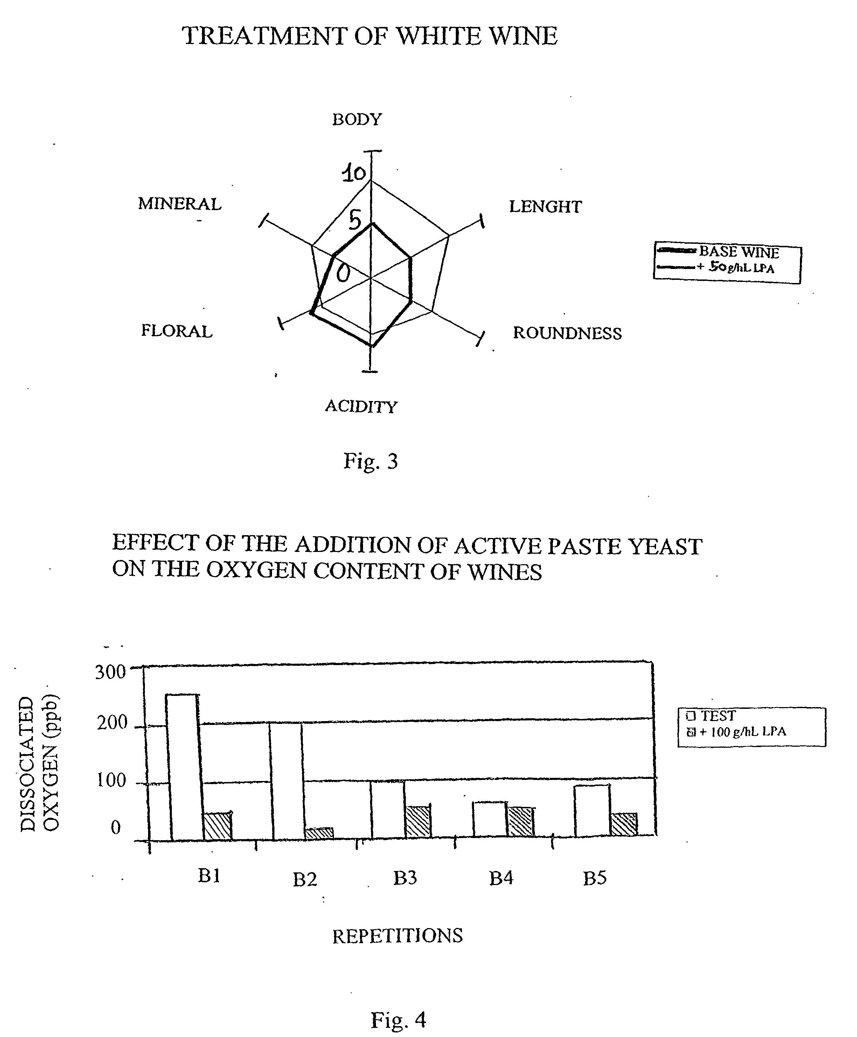

In Figures 2 and 3 are respectively shown the sensory profiles of a red wine and a white wine subjected to treatment with active paste yeast.

As can be seen the addition of active paste yeast (100 g/hL of LPA for red wine and 50 g/hL of LPA in the case of white wine) introduced significant modifications to the sensory profile of the two treated wines (red and white).

In both cases the most significant modifications relate to the increase in the body, length and roundness. In treated wines the acid taste sensation is reduced whilst on the nose the animal-mineral sensations are accentuated to the detriment of fruit, vegetable and floral sensations.

Therefore, in summary, the treatments with active paste yeast (LPA) introduce a significant increase in the taste sensation of the "volume" of the wine and of its harmony and an increase in the complexity of the olfactory sensation, reducing the vegetal notes and the sensations of excessive freshness.

The treatment of wines with active paste yeast (LPA) furthermore involves a small risk of oxidation due to the consumption of disassociated oxygen by the yeast itself.

The absorption of oxygen by active paste yeast has been evaluated for five white wines to which 100ghL of LPA was added, by measuring the oxygen immediately after the addition and after five days of contact. The results are shown in the diagram of Figure 4 which shows that the addition of active paste yeast (LPA) to a wine leads to a rapid diminution of the oxygen content present, which is more evident the higher the initial oxygen content.

During the course of the subsequent conservation it has furthermore been noted that the effect of limiting the presence of oxygen extends it for some months. In the case of white wine, this allows an increase in its life as well as limiting the use of sulphur dioxide.

In the course of experiments conducted on wines treated with active paste yeast (LPA) it has been noted that such treatment lead to a reduction in the intensity of colour of the wines.

This phenomenon can usefully be exploited to reduce the colour intensity and amber tone of some over-evolved white wines.

By way of example in Table IV there is shown the case of a white wine obtained from a late harvest and refined in barrels, characterised by an excessively heavy colour. In the table are compared the decolourising effects on the white wine of active past yeast (LPA) in comparison with other treatments.

The results show that the treatment with active paste yeast was highly effective in that specific case even in comparison with the use of very well known treatments for the absorption of colours and pigments.

**TABLE IV**

| **Treatment** | **D.O. 420 nm** |
|---|---|
| Test Wine | 0,320 |
| + 100 g/hL LPA | 0,210 |
| + 200 g/hL LPA | 0,180 |
| + 400 g/hL LPA | 0,170 |
| + 80 g/hL PVPP | 0,250 |
| + 10 g/hL Decolourising Carbon | 0,260 |
| + 40 g/hL Decolourising Carbon | 0,220 |

In this table LPA indicates active paste yeast, PVPP indicates polyvinylpolypyrrolidone and DO indicates optical density.

Finally, the capacity of active paste yeast (LPA) to produce colloids was tested experimentally.

For this purpose the index of filtrability is considered as a perameter to evaluate the presence of colloids in the wine and their modification over time.

A white wine which had been preliminarily micro-filtered was treated with 100gh/L of active paste yeast. Likewise another part of the wine had the same dose of active paste yeast added to it and, as adjuvant to improve its efficacy, 3 gh/L of betaglucanacasic enzyme (Mannozym™ oenological vason). The products were conserved at 18°C and periodically subject to evaluation of their filtrability.

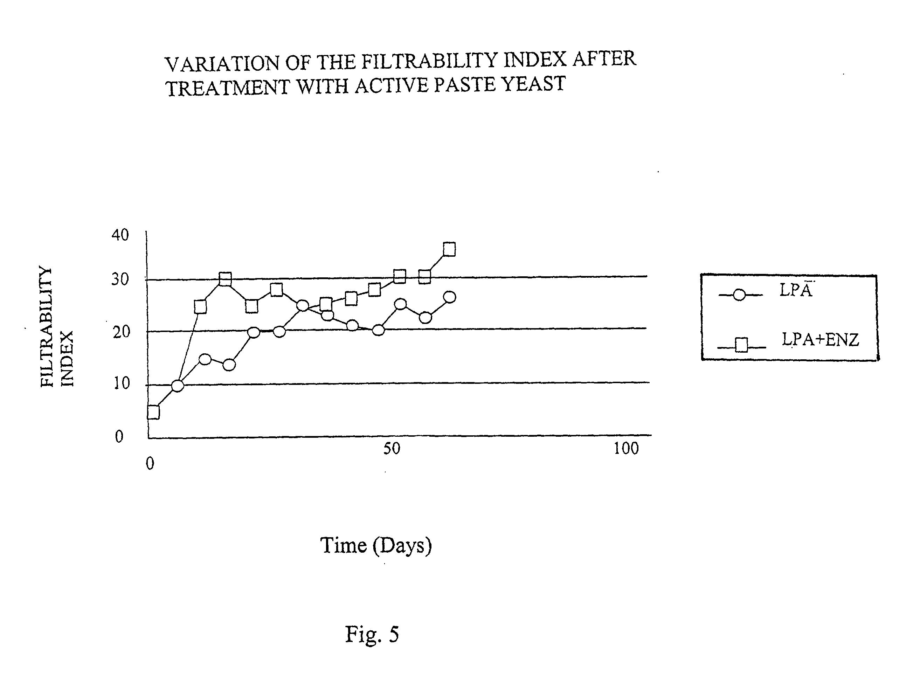

The results of the tests thus performed are plotted in Figure 5. It shows an increase in the index of filtrability due to the production of clogging colloids from the lysis of the yeast. The presence of betaglucanasic enzyme (Mannozym™ oenological vason) increasing and advancing the lysogenic activity of the yeast cells, accentuates and advancing the phenomenon bringing the index of filtrability to a maximum after 15 days. On the other hand, the time necessary to observe the phenomenon of lysis of the yeast in active paste in the absence of betaglucanasic enzyme is of the order of 20-40 days.

From tests undertaken it is possible to confirm that the addition of suitable doses of active paste yeast (LPA) leads to a positive modification of the compositional and organoleptic characteristics of white wines and red wines thus treated.

## Claims

1. A vinification process comprising at least one grape pressing phase to obtain the must, one or more fermentation phases for fermentation of the sugars by the action of a main dose of yeast to transform the must into wine, and at least one maturation phase of the wine to refine its organoleptic qualities, the process comprising an addition phase of at least one secondary dose of oenological yeast not intended to perform a fermentation action subsequently to said fermentation phase, **characterised in that** said secondary dose of yeast is composed of non-dried active paste yeast for oenological use with a residual water content lying between 50% and 95%.

2. A vinification process according to Claim 1, **characterised in that** said additon phase of at least one secondary dose of yeast leads to one or more activities from the following group:
- production of a colloidal fraction consequent on the lysogenic activity of the yeast cells with consequent production of wines having preferable sensory perceptions associated with them, the said colloidal fraction being operable, in particular, to reduce anomalous odours;
- production of mannoprotein by the yeast cells;
- stabilisation of the wines against precipitation of potassium bitartrate and protein;
- absorption of metals responsible for instability and for catalysing oxidative reactions in the wine;
- absorption by the yeast cell walls of colouring pigments, in particular of white wines as well as fermentation products, antiparasitic treatment residues etc;
- absorption of oxygen and consequent reduction of oxidation in the wines;
- liberation of enzymes and other substances responsible for the positive evolution of wines.

3. A vinification process according to Claim 1, **characterised in that** the secondary dose of the said active paste yeast for oenological use lies substantially between 50-150g/hl for white wines and 100-300g/hl for red wines.

4. A vinification process according to Claim 1, **characterised in that** the said addition phase is made during the said maturation phase.

5. A vinification process according to Claim 1, **characterised in that** the said addition phase of the said secondary dose of the active paste yeast for oenological use is accompanied by the use of adjuvants operable to improve the effect of the oenological active paste yeast.

6. A vinification process according to Claim 5, **characterised in that** the said adjuvant is a betaglucanasic enzyme.

7. A vinification process according to Claim 1, **characterised in that** the said addition phase of the said secondary dose of oenological yeast involves the contemporaneous use of oxygen.

## Patentansprüche

1. Weinherstellungsverfahren, das mindestens eine Traubenpressphase zur Erzeugung des Mosts, eine oder mehrere Fermentierungsphasen zur Fermentierung des Zuckers durch die Wirkung einer Haupthefedosis zur Umwandlung des Mosts in Wein sowie mindestens eine Reifungsphase des Weins zur Verfeinerung seiner organoleptischen Qualitäten umfasst, wobei das Verfahren eine Zusatzphase von mindestens einer sekundären Dosis önologischer Hefe umfasst, die keine Fermentierungswirkung nach der Fermentierungsphase bewirken soll, **dadurch gekennzeichnet, dass** die sekundäre Hefedosis aus nicht-getrockneter Aktivpastenhefe zur önologischen Verwendung mit einem Restwassergehalt zwischen 50% und 95% besteht.

2. Weinherstellungsverfahren nach Anspruch 1, **dadurch gekennzeichnet, dass** die Zusatzphase mindestens einer sekundären Hefedosis zu einer oder mehreren Aktivitäten der folgenden Gruppe führt:
- Erzeugung einer kolloidalen Fraktion nach der lysogenen Aktivität der Hefezellen mit anschließender Erzeugung von Weinen mit damit assoziierten bevorzugten sensorischen Wahrnehmungen, wobei die kolloidale Fraktion insbesondere der Reduktion anomaler Gerüche dient;
- Erzeugung von Mannoprotein durch die Hefezellen; Stabilisierung der Weine gegen Ausfällung von Kaliumbitartrat und Protein;
- Absorption von Metallen, die für die Instabilität und Katalyse oxidativer Reaktionen im Wein verantwortlich sind;
- Absorption von Farbpigmenten, insbesondere Weißweinen sowie Fermentierungsprodukten, Rückständen von Parasitenbekämpfungsmitteln, usw. durch die Wände der Hefezellen;
- Absorption von Sauerstoff und anschließende Reduktion der Oxidation in den Weinen; Freisetzung von Enzymen und anderen Substanzen, die für die positive Entwicklung der Weine verantwortlich sind.

3. Weinherstellungsverfahren nach Anspruch 1, **dadurch gekennzeichnet, dass** die sekundäre Dosis der Aktivpastenhefe zur önologischen Verwendung im Wesentlichen zwischen 50 und 150 g/hl für Weißweine und zwischen 100 und 300 g/hl für Rotweine liegt.

4. Weinherstellungsverfahren nach Anspruch 1, **dadurch gekennzeichnet, dass** die Zusatzphase während der Reifungsphase erfolgt.

5. Weinherstellungsverfahren nach Anspruch 1, **dadurch gekennzeichnet, dass** die Zusatzphase der sekundären Dosis der Aktivpastenhefe zur önologischen Verwendung von der Verwendung von Hilfsstoffen begleitet ist, die der Verbesserung der Wirkung der önologischen Aktivpastenhefe dient.

6. Weinherstellungsverfahren nach Anspruch 5, **dadurch gekennzeichnet, dass** der Hilfsstoff ein Betaglucanase-Enzym ist.

7. Weinherstellungsverfahren nach Anspruch 1, **dadurch gekennzeichnet, dass** die Zusatzphase der sekundären Dosis der önologischen Hefe die gleichzeitige Verwendung von Sauerstoff einschließt.

## Revendications

1. Procédé de vinification comprenant au moins une phase de pressurage du raisin pour obtenir le moût, une ou plusieurs phases de fermentation pour la fermentation des sucres par l'action d'une dose principale de levure pour transformer le moût en vin, et au moins une phase de maturation du vin pour affiner ses qualités organoleptiques, le procédé comprenant une phase d'addition d'au moins une dose secondaire de levure oenologique non destinée à réaliser une action de fermentation postérieurement à ladite phase de fermentation,
**caractérisé en ce que** ladite dose secondaire de levure est composée d'une levure de pâte active non séchée pour un usage oenologique avec une teneur en eau résiduelle se situant entre 50% et 95%.

2. Procédé de vinification selon la revendication 1,
**caractérisé en ce que** ladite phase d'addition d'au moins une dose de levure secondaire conduit à une ou plusieurs activités parmi le groupe suivant :
- production d'une fraction colloïdale consécutive à l'activité lysogénique des cellules de levure avec production résultante de vins ayant des perceptions sensorielles préférables associées à eux, ladite fraction colloïdale étant utilisable, en particulier, pour réduire les odeurs anormales ;
- production de mannoprotéine par les cellules de levure .
- stabilisation des vins vis-à-vis de la précipitation de bitartrate de potassium et de protéine ;
- absorption de métaux responsables d'instabilité et de catalyseur de réactions oxydantes dans le vin ;
- absorption par les parois des cellules de levure de pigments colorants, en particulier de vins blancs ainsi que de produits de fermentation, de résidus de traitement antiparasite etc. ;
- absorption d'oxygène et réduction résultante d'oxydation dans les vins ;
- libération d'enzymes et d'autres substances responsables de l'évolution positive des vins.

3. Procédé de vinification selon la revendication 1,
**caractérisé en ce que** la dose secondaire de ladite levure de pâte active pour un usage oenologique se situe sensiblement entre 50-150 g/hl pour les vins blancs et entre 100-300 g/hl pour les vins rouges.

4. Procédé de vinification selon la revendication 1,
**caractérisé en ce que** ladite phase d'addition est effectuée pendant ladite phase de maturation.

5. Procédé de vinification selon la revendication 1,
**caractérisé en ce que** ladite phase d'addition de ladite dose secondaire de la levure de pâte active pour un usage oenologique s'accompagne par l'utilisation d'adjuvants destinés à améliorer l'effet de la levure de pâte active oenologique.

6. Procédé de vinification selon la revendication 5,
**caractérisé en ce que** ledit adjuvant est une enzyme bêtaglucanasique.

7. Procédé de vinification selon la revendication 1,
**caractérisé en ce que** ladite phase d'addition de ladite dose secondaire de levure oenologique implique l'utilisation concomitante d'oxygène.
